(19) **Europäisches Patentamt**

**European Patent Office**

**Office européen des brevets**

(11) **EP 1 055 292 B1**

(12) **EUROPEAN PATENT SPECIFICATION**

(45) Date of publication and mention
of the grant of the patent:
**02.08.2006 Bulletin 2006/31**

(51) Int Cl.:
*H04B 3/23* (2006.01)      *H04M 9/08* (2006.01)

(21) Application number: **99906627.7**

(86) International application number:
**PCT/SE1999/000135**

(22) Date of filing: **02.02.1999**

(87) International publication number:
**WO 1999/041848 (19.08.1999 Gazette 1999/33)**

(54) **Echo canceller**

Echokompensator

Compensateur d'écho

(84) Designated Contracting States:
**DE FI FR SE**

(30) Priority: **13.02.1998 US 23304**

(43) Date of publication of application:
**29.11.2000 Bulletin 2000/48**

(73) Proprietor: **TELEFONAKTIEBOLAGET LM
ERICSSON (publ)
164 83 Stockholm (SE)**

(72) Inventors:
• **TRUMP, Tönu
S-124 62 Stockholm (SE)**
• **ERIKSSON, Anders
S-757 58 Uppsala (SE)**

(74) Representative: **HOFFMANN EITLE
Patent- und Rechtsanwälte
Arabellastrasse 4
81925 München (DE)**

(56) References cited:
**EP-A- 0 698 986      EP-A- 0 721 252**

• **PATENT ABSTRACTS OF JAPAN vol. 097, no. 009, 30 September 1997 & JP 09 113350 A (NIPPON TELEGR &AMP;TELEPH CORP &LT; NTT&GT;), 2 May 1997**
• **GAY S L, TAVATHIA S: "The fast affine projection algorithm" 1995 INTERNATIONAL CONFERENCE ON ACOUSTICS, SPEECH, AND SIGNAL, vol. 5, 9 - 12 May 1995, pages 3023-3026, XP002064827 NEW YORK, USA cited in the application**

**Description**

The present invention relates to communications systems, and more particularly, to echo suppression in bi-directional communications links.

Signal echo is a well known phenomenon by which energy in a transmitted signal reflects back toward the source of the signal. For example, in the context of network telephony, signal echo can result from reflections at the hybrid circuits which link four-wire network connections to two-wire local connections (e.g., at a subscriber loop). Considerable echo is also generated when a telephone set is used in the so-called hands-free mode (e.g., in teleconferencing systems and automobile telephone applications). In the hands-free context, echo results from acoustical coupling between a telephone loudspeaker and a proximate telephone microphone.

Such signal echo is not typically a concern where the round trip delay associated with the echo is small. However, where the round trip delay is longer (e.g., on the order of hundreds of milliseconds), the signal echo can become annoying or even intolerable for a human telephone user. In practice, the round trip delay can be a physical delay caused by a long transmission path (e.g., when a satellite link is used) or a processing delay caused by network equipment (e.g., a digital speech encoder or decoder).

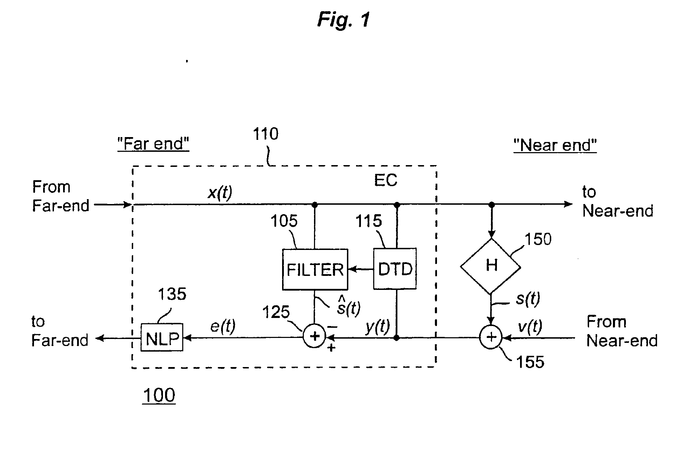

The echo problem can be understood with reference to Figure 1, wherein a bi-directional communication link between a far-end user and a near-end user is depicted in combination with an exemplary echo suppression system 100 in which the teachings of the present invention can be implemented. As shown, the exemplary echo suppression system 100 includes an echo canceler 110 comprising an adaptive filter 105, a double-talk detector 115, a summation device 125 and a non-linear processor 135.

In Figure 1, a far-end input signal $x(t)$ (e.g., an audio signal in the context of network telephony) is coupled to a reference input of the adaptive filter 105 and to a first reference input of the double-talk detector 115. Additionally, an echo estimate output $\hat{s}(t)$ of the adaptive filter 105 is coupled to a subtractive input of the summation device 125, and an observed near-end signal $y(t)$ is coupled to an additive input of the detection output of the double-talk detector 115 is coupled to a control input of the adaptive filter 105, and an error signal output $e(t)$ of the summation device 125 is coupled to an input of the non-linear processor 135. An output of the non-linear processor 135 serves as a far-end signal output for the echo canceler 110.

In operation, the far-end signal $x(t)$ is provided to the near-end user and is at the same time modified and reflected back toward the far-end user by the near-end echo path H. As described above, the near-end echo path H results, for example, from a hybrid mismatch in a telephone network and/or an unblocked acoustic path between a near-end loudspeaker and a near-end microphone. The near-end echo path H can be characterized by its impulse response h and is represented conceptually as an finite impulse response (FIR) filter 150 in Figure 1.

As shown, the resulting echo signal $s(t)$ then combines with a near-end input signal $v(t)$ to yield the observed near-end signal $y(t)$ at the input of the echo canceler 110. The near-end signal $v(t)$ includes, for example, near-end voice and/or near-end background noise. Mixing of the near-end signal $v(t)$ and the echo signal $s(t)$ is represented in the system 100 of Figure 1 by way of a second summing device 155. Those skilled in the art will appreciate, however, that the second summing device 155 is conceptual in nature and that no such device is actually included in a practical system. Rather, mixing of the near-end signal $v(t)$ and the echo signal s(t) is inherent in the system configuration (e.g., when a near-end microphone simultaneously picks up near-end voice and noise as well as echo from a near-end loudspeaker).

To prevent the echo signal $s(t)$ from reaching the far-end user, the echo canceler 110 dynamically adjusts the impulse response of the adaptive filter 105 to match that of the near-end echo path H and subtracts the resulting echo estimate $\hat{s}(t)$ from the observed near-end signal $y(t)$ to provide the echo-canceled error, or residual signal $e(t)$. However, since the adaptive filter 105 typically cannot provide a perfect match (e.g., due to nonlinearities in the network equipment and/or dynamic changes in the near-end echo path), the echo canceler also uses the non-linear processor, or residual echo suppressor 135 to provide additional echo suppression as necessary. Additionally, because the signals involved in a telephone call are nonstationary by nature, the echo canceler 110 also typically uses the double-talk detector 115 to inhibit filter adaptation when a measurement of the echo signal to near end signal ratio indicates that improvement of the echo path estimate cannot be attained by continuing to adapt the filter 105.

According to most conventional systems, the echo canceler 110 employs a least mean squares.(LMS) adaptive algorithm or a normalized least mean squares (NLMS) adaptive algorithm to update the filter 105. Such algorithms are attractive for use in practical systems as they are quite robust and provide low computational complexity. Other conventional systems have employed the well known affine projection adaptive algorithm (see, for example, U.S. Patent No. 5,428,562 to Gay, issued June 27, 1995) and various frequency domain algorithms (see, for example, J.J. Shynk, "Frequency-Domain and Multirate Adaptive Filtering," *IEEE Signal Processing Magazine,* Jan. 1992, pp. 14-37 and J. Soo and K.K. Pang, "Multidelay Block Frequency Domain Adaptive Filter," *IEEE Trans. Acoustics, Speech and Signal Processing,* vol. 38, No. 2, Feb. 1990, pp. 373-376). Document US 5 570 423 discloses a further echo canceler exploiting a NLMS algorithm.

Most of the above described conventional adaptive algorithms are designed to minimize in some sense the error signal power $E[e^2(t)]$, or some estimate thereof, and therefor implicitly assume that the noise component of the near-end input signal $v(t)$ is either absent or white. While such an assumption is accurate where the noise component consists primarily of thermal noise or quantization noise, it is often faulty in practical situations where the noise component instead consists primarily of background sounds from the near-end environment.

Consequently, conventional echo canceling systems often perform poorly in the presence of substantial colored near-end noise, and thus there is a need for improved methods and apparatus for adapting echo cancelation filters.

Summary of the Invention

According to one aspect of the present invention, there is provided an echo cancellation device configured to suppress an echo component of an observed signal, the echo component resulting from coupling of a source signal through an echo path, said echo cancellation device comprising: an adaptive filter configured to approximate said echo path and to thereby provide an estimate of said echo component, said adaptive filter being configured to employ a noise component estimation of said observed signal, and characterized by: means for subtracting said estimate of said echo component from said observed signal to provide an echo-cancelled residual signal; means for updating an impulse response estimate of said echo path when a measurement of power in a block of samples of said source signal is above a threshold; means for updating the noise component estimation of said observed signal otherwise, said means for updating the impulse response estimate of said echo path further comprising means for estimating the noise component of said observed signal based upon an estimation of a power spectrum of said echo-cancelled residual signal.

According to another aspect of the present invention, there is provided a method for cancelling an echo component of an observed signal, the echo component resulting from coupling a source signal through an echo path, said method comprising the steps of: sampling said source signal to provide a block of source signal samples; computing a discrete Fourier transform of said block of source signal samples to provide a frequency domain representation of said source signal; multiplying said frequency domain representation of said source signal by a frequency domain estimate of an impulse response of said echo path to provide a frequency domain echo estimate; computing an inverse discrete Fourier transform of said frequency domain echo estimate to provide a time domain echo estimate signal; subtracting said time domain echo estimate signal from said observed signal to provide an echo-cancelled residual signal; computing a discrete Fourier transform of a block of samples of said echo-cancelled residual signal to provide a frequency domain representation of said echo-cancelled residual signal; adapting said frequency domain estimate of the impulse response of said echo path based upon said frequency domain representation of said echo-cancelled residual signal and based upon said frequency domain representation of said source signal, said step of adapting said frequency domain estimate of said impulse response incorporates an estimation of a noise component of said observed signal, and wherein said step of adapting said frequency domain estimate of said impulse response comprises the steps of: updating said frequency domain estimate of said impulse response when a measurement of power in said block of source signal samples is above a threshold; and updating the noise component estimation of said observed signal otherwise, the updated noise component estimation being employed in a subsequent update of the frequency domain estimate of said impulse response as a respective noise component.

These and other features and advantages of the present invention are explained in greater detail hereinafter with reference to the illustrative examples shown in the accompanying drawings. Those skilled in the art will appreciate that the described embodiments are provided for purposes of illustration and understanding and that numerous equivalent embodiments are contemplated herein.

For a better understanding of the invention, and to show how the same may be carried into effect, reference will now be made, by way of example, to the accompanying drawings, in which:

Figure 1 depicts an exemplary echo cancellation system in which embodiments of the invention can be implemented;
Figure 2 depicts an exemplary adaptive algorithm according to the invention;
Figures 3-5 depict computer simulation results demonstrating the efficacy of embodiments of the invention; and
Figures 6 and 7 depict an alternative adaptive algorithm according to the invention.

The present system provides methods and apparatus for incorporating partial knowledge of system measurement noise into an adaptive filtering algorithm. Exemplary algorithms are obtained by minimizing a best linear unbiased estimate (BLUE) criterion function using a stochastic gradient method and by then converting to the frequency domain to reduce computational complexity. Advantageously, system noise characteristics are measured during natural pauses in user speech and then taken into account during filter adaptation. Thus, as compared to conventional devices, an echo canceler constructed according to the invention provides superior echo cancelation in situations where there is considerable background noise.

Advantageously, measurements of the noise component of the observed signal can be made in real time during the natural pauses in one or more speech components of the observed signal. In an exemplary embodiment, such pauses are determined based upon a measurement of power in a block of samples of the echo source signal.

According to embodiments, the estimated impulse response of the adaptive filter is computed based upon a weighted sum of the residual signal power spectrum estimate and the echo source power spectrum estimate. For example, the weighted sum can be computed by adding the echo source power spectrum estimate to a product of the residual signal power spectrum estimate and a noise matching parameter. Advantageously, the noise matching parameter can be adjusted dynamically based upon samples of the residual signal and samples of the echo source signal.

The step of updating the frequency domain estimate of the impulse response can include the steps of updating an estimate of a signal power spectrum of the source signal, computing a weighted sum of the noise power spectrum estimate and the signal power spectrum estimate, and computing an update of the frequency domain estimate based upon the weighted sum. Advantageously, the weighted sum can be computed by adding the signal power spectrum estimate to a product of the noise power spectrum estimate and a noise matching parameter. According to embodiments, the noise matching parameter is dynamically adjusted based upon samples of the echo source signal and the echo canceled residual signal.

According to the invention, a best linear unbiased estimate (BLUE) criterion function is used as a target function in the development of adaptive filter algorithms for use in echo cancelation systems. Advantageously, such a target function enables the resulting algorithms to account for color which can be present in the measurement noise of practical echo cancelation systems. Consequently, the resulting algorithms provide improved echo cancelation performance as compared to conventional algorithms.

In the following rigorous development of the adaptive algorithms of the present invention, italic letters, boldface lowercase letters and boldface uppercase letters are used to represent scalars, column vectors and matrices, respectively. Additionally, superscripts *T. H* and † are used to denote transpose, Hermitian transpose and Maore-Penrose pseudo-inverse operations, respectively. Further, the symbol I is used to represent the identity matrix, and the symbol 0 is used to represent a matrix of all zeros.

Assuming that the echo path H in an echo canceling system can be modeled as a finite impulse response filter having N taps or filter coefficients, and also assuming that the correlation properties of the near-end input signal $x(t)$ of the system can be well modeled using L correlation lags, then an alternative best linear unbiased estimate criterion function $V$ can be defined as:

$$V = (\mathbf{Xh} - \mathbf{y})^T (\gamma \mathbf{R}_v + \mathbf{XX}^T)^\dagger (\mathbf{Xh} - \mathbf{y}), \qquad (1)$$

where $\mathbf{h}$ is the *N* vector of unknown filter coefficients (i.e., the impulse response of the echo path H), $\gamma$ is a positive constant and $\mathbf{X}$ is an $M \times N$ matrix of input signal samples defined as $\mathbf{X} = [\mathbf{x}(t)...\mathbf{x}(t - N + 1)]$, with $\mathbf{x}(t) = [x_{t-M+1}, ... , x_t]^T$. Additionally, the vector $\mathbf{y} = \mathbf{Xh} + \mathbf{v}$ is the *M* vector of observed signal samples, and $\mathbf{v}$ is the *M* vector of measurement noise samples having symmetric Toeplitz covariance matrix $\mathbf{R}_v$. Note that, although the above provided definition of the input sample matrix $\mathbf{X}$ is perhaps not the most consequent definition in certain contexts, it beneficially provides frequency domain algorithms which show strong similarities with the classical overlap-save frequency domain adaptive filter (FDAF) algorithms which are described, for example, in G.A. Clark, S.R. Parker and S.K. Mitra, "A Unified Approach to Time- and Frequency-Domain Realization of FIR Adaptive Digital Filters," *IEEE Trans. Acoustics, Speech and Signal Processing,* Vol. 31, pp. 1073-1083, Oct. 1983; S. Haykin, *"Adaptive Filter Theory,"* Third Edition, Prentice Hall, 1996; and the above cited article by J.J. Shynk, "Frequency-Domain and Multirate Adaptive Filtering," *IEEE Signal Processing Magazine,* Jan. 1992, pp. 14-37).

Given the criterion function definition of equation (1), the derivative of the criterion function $V$ with respect to the unknown coefficient vector $\mathbf{h}$ can be written as

$$\frac{\partial V}{\partial \mathbf{h}} = 2[\mathbf{X}^T(\gamma \mathbf{R}_v + \mathbf{XX}^T)^\dagger \mathbf{Xh} - 2\mathbf{X}^T(\gamma \mathbf{R}_v + \mathbf{XX}^T)^\dagger \mathbf{y}$$

$$= -2\mathbf{X}^T(\gamma \mathbf{R}_v + \mathbf{XX}^T)^\dagger \mathbf{e}, \qquad (2)$$

where $\mathbf{e} = \mathbf{y} - \mathbf{Xh}$, corresponding to samples of the error signal $e(t)$ described above. An estimate of the coefficient vector $\mathbf{h}$ can thus be written as

$$\hat{\mathbf{h}} = (\mathbf{X}^T(\gamma\mathbf{R}_v + \mathbf{X}\mathbf{X}^T)^\dagger\mathbf{X})^{-1}\mathbf{X}^T(\gamma\mathbf{R}_v + \mathbf{X}\mathbf{X}^T)^\dagger\mathbf{y}. \qquad (3)$$

Advantageously, it can be shown that equation (3) is the best linear unbiased estimate of the coefficient vector **h** for the case of possibly singular $\mathbf{R}_v$. Further, it is argued in T. Söderström and P. Stoica, *"System Identification,"* Prentice Hall, 1988, pp. 89-90, that this estimate, at least for the case $\gamma = 1$, has better numerical properties than the more traditional best linear unbiased estimate resulting from minimization of $(\mathbf{Xh} - \mathbf{y})^T\mathbf{R}_v^{-1}(\mathbf{Xh} - \mathbf{y})$ (see, for example, K.C. Ho, "A Minimum Misadjustment Adaptive FIR Filter," *IEEE Trans. Signal Processing,* Vol. 44, pp. 577-585, March, 1996).

According to the invention, a gradient algorithm for estimating the coefficient vector **h** can then be defined such that equation (1) is minimized. Specifically, a gradient algorithm according to the invention is defined as

$$\mathbf{e}(t) = \mathbf{y}(t) - \mathbf{X}(t)\hat{\mathbf{h}}(t) \qquad (4)$$

$$\hat{\mathbf{h}}(t+1) = \hat{\mathbf{h}}(t) + \mu\mathbf{X}^I(t)(\gamma\mathbf{R}_v + \mathbf{X}(t)\mathbf{X}^T(t))^\dagger\mathbf{e}(t). \qquad (5)$$

Note that in the equations above, the length $M$ of the entire signal has been replaced by a block length $L < M$ in all corresponding matrix dimensions. Note also that, in the case of white noise $v(t)$, the gradient algorithm of the invention coincides with the relaxed and regularized form of the affine projection algorithm with the regularization parameter proportional to the measurement noise variance (see, for example, S.L. Gay and S. Tavathia, "The Fast Affine Projection Algorithm," *Proc. ICASSP'95,* Detroit, Vol. 5, pp. 3023-3026, May, 1995).

According to the invention, however, the equations above are used to develop a frequency domain algorithm. To do so, an $(N + L) \times (N + L)$ cyclically extended input signal matrix is defined as

$$\mathbf{X}_c(t) = \mathrm{cycl}([x_{t-N-L+1} \; x_t \; x_{t-1} \; ... \; x_{t-N-L+2}])$$

$$= \begin{bmatrix} x_{t-N-L+1} & x_t & \cdots & x_{t-N-L+2} \\ x_{t-N-L+2} & x_{t-N-L+1} & \cdots & x_{t-N-L+3} \\ & & \cdots & \\ x_{t-L} & x_{t-L+1} & \cdots & x_{t-L-1} \\ x_{t-L+1} & x_{t-L} & \cdots & x_{t-L-2} \\ & & \cdots & \\ x_t & x_{t-1} & \cdots & x_{t-N-L+1} \end{bmatrix}.$$

Note that this is just one particular cyclic extension of several possible. The advantage of this cyclic extension is that it leads to intuitively well understandable algorithms. A similar extension is used, for example, in the above cited paper by G.A. Clark, S.R. Parker and S.K. Mitra, "A Unified Approach to Time- and Frequency-Domain Realization of FIR Adaptive Digital Filters," *IEEE Trans. Acoustics, Speech and Signal Processing,* Vol. 31, pp. 1073-1083, Oct. 1983.

The original input signal matrix X(t) appears in the lower left corner of the cyclically extended input signal matrix $\mathbf{X}_c(t)$ and, consequently, the input signal matrix $\mathbf{X}(t)$ can be written as

$$\mathbf{X}(t) = [\mathbf{0}_{L \times N} \; \mathbf{I}_L]\mathbf{X}_c(t) \begin{bmatrix} \mathbf{I}_N \\ \mathbf{0}_{L \times N} \end{bmatrix}. \qquad (6)$$

The extended matrix $\mathbf{X}_c(t)$ is right-cyclic by construction and so is its transpose $\mathbf{X}^T_c(t)$. The eigendecomposition of a right-cyclic matrix (see, for example, S.L. Marple, Jr., *"Digital Spectral Analysis with Applications,"* Prentice Hall, 1987) is given by

$$\mathbf{X}_c^T = \mathbf{F}\Lambda\mathbf{F}^H,$$

(7)

where the symbol $\mathbf{F}$ represents the $(N + L) \times (N + L)$ discrete Fourier transform matrix having elements $\mathbf{F}_{kl} = \frac{1}{\sqrt{N+L}} exp\left(\frac{-j2\pi kl}{N+L}\right)$, and where the symbol $\Lambda$ represents a diagonal matrix formed by the discrete Fourier transform of the first row of the extended transpose matrix $\mathbf{X}_C^T$. Specifically, the diagonal matrix A is defined as

$$\Lambda = \mathrm{diag}(\mathrm{DFT}([x_{t-N-L+1}...x_t])).$$

In the case of real valued signals, the transpose of $\mathbf{X}_c$ and the Hermitian transpose of $\mathbf{X}_c$ are the same and, hence, $\mathbf{X}_c^T = \mathbf{F}\Lambda\mathbf{F}^H = \mathbf{F}^H \Lambda^H \mathbf{F}$ and $\mathbf{X}_c = \mathbf{F}\Lambda^H \mathbf{F}^H = \mathbf{F}^H \Lambda\mathbf{F}$.

Thus, substituting equations (6) and (7) into equations (4) and (5), the adaptive algorithm of the invention can be expressed as:

$$\mathbf{e}(t) = \mathbf{y}(t) - [\mathbf{0}_{L \times N}\ \mathbf{I}_L]\mathbf{F}^H \Lambda\mathbf{F} \begin{bmatrix} \mathbf{I}_N \\ \mathbf{0}_{L \times N} \end{bmatrix} \hat{\mathbf{h}}(t)$$

(8)

$$\hat{\mathbf{h}}(t+1) = \hat{\mathbf{h}}(t) + \mu[\mathbf{I}_N\mathbf{0}_{N \times L}]\mathbf{F}^H \Lambda^H \mathbf{F}$$

(9)

$$\times \begin{bmatrix} \mathbf{0}_{N \times L} \\ \mathbf{I}_L \end{bmatrix} (\gamma\mathbf{R}_v + \mathbf{X}\mathbf{X}^T)^\dagger \mathbf{e}(t).$$

Further, by defining a frequency response vector for the unknown system as

$$\hat{\mathbf{f}}(t) = \mathbf{F} \begin{bmatrix} \mathbf{I}_N \\ \mathbf{0}_{L \times N} \end{bmatrix} \hat{\mathbf{h}}(t),$$

(10)

and by defining an intermediate vector g(t) as

$$\mathbf{g}(t) = \mathbf{F} \begin{bmatrix} \mathbf{0}_{N \times L} \\ \mathbf{I}_L \end{bmatrix} (\gamma\mathbf{R}_v + \mathbf{X}(t)\mathbf{X}^T(t))^\dagger \mathbf{e}(t),$$

(11)

the adaptive algorithm of the invention can be expressed as

$$\mathbf{e}(t) \;\dot{=}\; \mathbf{y}(t) - [\mathbf{0}_{L \times N} \;\; \mathbf{I}_L] \mathbf{F}^H \; \Lambda \hat{\mathbf{f}}(t) \qquad\qquad (12)$$

$$\hat{\mathbf{f}}(t+1) \;=\; \hat{\mathbf{f}}(t) + \mu \mathbf{F} \begin{vmatrix} \mathbf{I}_N \\ \mathbf{0}_{L \times N} \end{vmatrix} [\mathbf{I}_N \;\; \mathbf{0}_{N \times L}] \mathbf{F}^H \; \Lambda^H \mathbf{g}(t). \qquad\qquad (13)$$

According to a first exemplary embodiment, the term $\gamma \mathbf{R}_v + \mathbf{X}(t)\mathbf{X}^T(t)$ is approximated by a Toeplitz matrix, and a recursive algorithm such as the well known Levinson algorithm (see, for example, the above cited text by S.L. Marple, Jr., *"Digital Spectral Analysis with Applications,"* Prentice Hall, 1987) is used to find the term $(\gamma \mathbf{R}_v + \mathbf{X}(t)\mathbf{X}^T(t))^\dagger \mathbf{e}(t)$. This first embodiment is referred to hereinafter as ALGO1 .

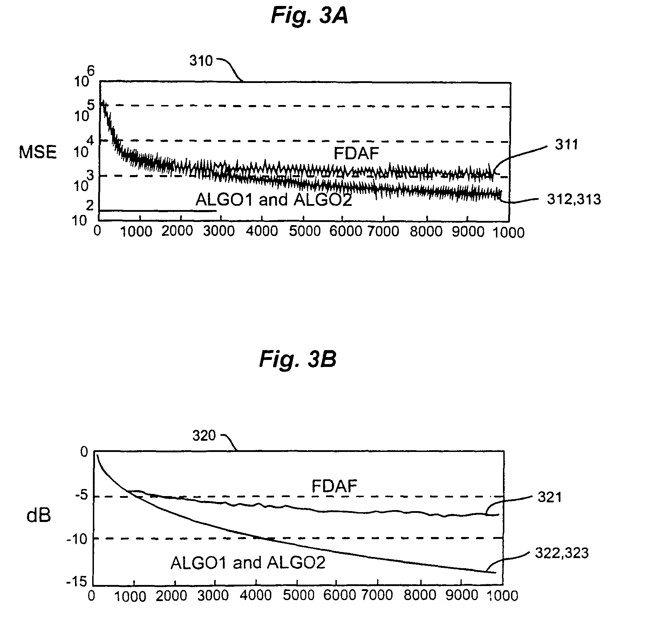

For the case of $L << N$, the first embodiment ALGO1 provides satisfactory computational complexity on the order of $(O((N + L) \log_2 (N + L)) + O(L^2))$. However, since the complexity of the Levinson algorithm is not acceptable in all practical situations, the present invention utilizes several simplifying approximations to provide an alternative, more streamlined algorithm. Advantageously, the above described first embodiment ALGO1 has been used in computer simulations to validate the approximations used to derive the lower complexity algorithm. Results of the computer simulations are described in detail below with reference to Figures 3-5.

To derive the lower complexity algorithm, the intermediate vector $\mathbf{g}(t)$ is expressed alternatively as

$$\mathbf{g}(t) \;=\; \left( \mathbf{F} \begin{bmatrix} \mathbf{0}_{N \times L} \\ \mathbf{I}_L \end{bmatrix} \right) (\gamma \mathbf{R}_v + \mathbf{X}(t)\mathbf{X}^T(t)) \qquad\qquad (14)$$

$$\times \; [\mathbf{0}_{L \times N} \;\; \mathbf{I}_L] \; \mathbf{F}^{H)\dagger} \mathbf{F} \begin{bmatrix} \mathbf{0}_{N \times 1} \\ \mathbf{e}(t) \end{bmatrix}.$$

To see that this is possible, consider the equation $\mathbf{Rz} = \mathbf{e}$, where $\mathbf{R} = \gamma \mathbf{R}_v + \mathbf{XX}^T$ is a nonnegative definite $L \times L$ matrix and $\mathbf{z}$ and $\mathbf{e}$ are $L$ vectors. The latter portion of the equation is equivalent to

$$\begin{vmatrix} \mathbf{0}_N & \mathbf{0}_{N \times L} \\ \mathbf{0}_{L \times N} & \mathbf{R} \end{vmatrix} \begin{bmatrix} \mathbf{0}_{N \times 1} \\ \mathbf{z} \end{bmatrix} \;=\; \begin{bmatrix} \mathbf{0}_{N \times 1} \\ \mathbf{e} \end{bmatrix},$$

which can be rewritten as

$$\mathbf{F} \begin{vmatrix} \mathbf{0}_N & \mathbf{0}_{N \times L} \\ \mathbf{0}_{L \times N} & \mathbf{R} \end{vmatrix} \mathbf{F}^H \mathbf{F} \begin{bmatrix} \mathbf{0}_{N \times 1} \\ \mathbf{z} \end{bmatrix} \;=\; \mathbf{F} \begin{bmatrix} \mathbf{0}_{N \times 1} \\ \mathbf{e} \end{bmatrix}.$$

Thus, by equation (11), the vector $\mathbf{g}(t)$ can be expressed as

$$\mathbf{g}(t) \;=\; \mathbf{F} \begin{bmatrix} \mathbf{0}_{N \times 1} \\ \mathbf{z} \end{bmatrix}$$

$$\mathbf{g}(t) \;=\; \left( \mathbf{F} \begin{bmatrix} \mathbf{0}_N & \mathbf{0}_{N \times L} \\ \mathbf{0}_{L \times N} & \mathbf{R} \end{bmatrix} \mathbf{F}^H \right)^{\dagger} \mathbf{F} \begin{bmatrix} \mathbf{0}_{N \times 1} \\ \mathbf{e} \end{bmatrix},$$

which is equivalent to the expression for g(t) provided in equation (14).

According to the invention, the input signal correlation matrix is then approximated by a Toeplitz Matrix $\mathbf{R}_x \approx \mathbf{X}(t)\mathbf{X}^T(t)$, and a cyclic extension $\mathbf{R}_c$ of the sum of the correlation matrices is defined to satisfy

$$\gamma \mathbf{R}_v + \mathbf{X}(t)\mathbf{X}^T(t) \approx \gamma \mathbf{R}_v + \mathbf{R}_x = [\mathbf{0}_{L \times N}\ \mathbf{I}_L]\mathbf{R}_c \begin{bmatrix} \mathbf{0}_{N \times L} \\ \mathbf{I}_L \end{bmatrix}.$$

Then, assuming that $L \leq N + 1$, the first row of the extension $\mathbf{R}_c$ obeys even DFT symmetry and, as a result, it can be decomposed as

$$\mathbf{R}_c = \mathbf{F}^H \, \mathbf{D} \mathbf{F} = \mathbf{F}\mathbf{D}\mathbf{F}^H, \qquad\qquad\qquad (15)$$

where $\mathbf{D}$ is a diagonal matrix with the discrete Fourier transformed first row of $\mathbf{R}_c$ on the main diagonal. The main diagonal of $\mathbf{D}$ is thus real and symmetric by construction. Accordingly, equation (14) can now be rewritten as

$$\mathbf{g}(t) \;=\; (\mathbf{KDK})^{\dagger} \mathbf{F} \begin{bmatrix} \mathbf{0}_{N \times 1} \\ \mathbf{e}(t) \end{bmatrix}, \qquad\qquad\qquad (16)$$

where

$$\mathbf{K} \;=\; \mathbf{F} \begin{bmatrix} \mathbf{0}_{N \times L} \\ \mathbf{I}_L \end{bmatrix} [\mathbf{0}_{L \times N}\mathbf{I}_L]\mathbf{F}^H$$

can be seen as a window matrix. More specifically, the matrix $\mathbf{K}$ is a right-cyclic matrix with elements of the first row given by

$$\mathbf{K}(1,n) = \frac{1}{N+L}\exp\left( \frac{-j\omega(2N+L-1)}{2} \right) \frac{\sin(\omega L/2)}{\sin(\omega/2)},$$

$\omega \approx \dfrac{2\pi n}{N+L}$ , which corresponds to a rectangular window in the time domain.

Note that using equation (16) in equation (13) still results in an algorithm with relatively high computational complexity. Advantageously, however, the present invention provides a very low complexity algorithm by approximating the matrix $\mathbf{K}$ by an identity matrix. Interestingly, such an approximation results in an algorithm which is very similar to the self-orthogonalizing frequency domain adaptive filter (see, for example, the above cited article by J.J. Shynk, "Frequency-Domain and Multirate Adaptive Filtering," *IEEE Signal Processing Magazine,* Jan. 1992, pp. 14-37) with signal power at frequency bins (used to normalize the step sizes at respective frequencies) replaced by the weighted sum of signal and measurement noise powers.

In the foregoing discussion, it has been assumed that the measurement noise correlation matrix $\mathbf{R}_v$ is known. In practice, however, $\mathbf{R}_v$ is often unknown and is estimated. For example, in voice echo cancelation applications, it is natural to initialize the estimate as $\sigma_v^2 \mathbf{I}$, where $\sigma_v^2$ is an expected noise power. Further, in certain applications, it is possible to obtain a better initial estimate during the algorithm initialization phase. The estimate can then be refreshed during natural pauses in speech (e.g., when $\mathrm{Tr}(\Lambda\Lambda^H)$ is above a predefined threshold *th*). Advantageously, doing so does not have a significant impact on the computational complexity of the algorithm, as the coefficients should not be updated when the input signal power is low anyway (see, for example, T. Petillon, A. Gilloire and S Theodoridis, "The Fast Newton Transversal Filter: An Efficient Scheme for Acoustic Echo Cancellation in Mobile Radio," *IEEE Trans. Signal Processing,* Vol. 42, pp. 509-517. March 1994).

The resulting low-complexity algorithm according to the invention, referred to hereinafter as ALGO2, is thus described arithmetically as follows:

## ADAPTIVE ALGORITHM ALGO2

INITIALIZE ESTIMATES AS:

$$\hat{\mathbf{f}}(t=0) \;=\; \mathbf{0}_{(N+L)\times 1}$$

$$\mathbf{P}_x(t=0) \;=\; \sigma_x^2 \mathbf{I}_{N+L}$$

$$\mathbf{P}_v(t=0) \;=\; \sigma_v^2 \mathbf{I}_{N+L}$$

THEN, FOR EACH NEW BLOCK
OF *L* INPUT SAMPLES, COMPUTE:

$$\Lambda = \mathrm{diag}(\mathrm{DFT}([x_{t-N-L+1}\cdots x_t]))$$

$$\mathbf{e}(t) = \mathbf{y}(t) - [\mathbf{0}_{L\times N}\; \mathbf{I}_L]\mathbf{F}^H\; \Lambda\hat{\mathbf{f}}(t)$$

$$\mathbf{c}(t) \;=\; \mathbf{F}\begin{bmatrix}\mathbf{0}_{N\times 1}\\ \mathbf{e}(t)\end{bmatrix}$$

AND, IF $\mathrm{Tr}(\Lambda\Lambda^H) > th,$ THEN COMPUTE:

$$\mathbf{P}_x = \beta\,\mathbf{P}_x + (1 - \beta)\,\Lambda\Lambda^H$$

$$\mathbf{D} = \mathbf{P}_x + \gamma\mathbf{P}_v$$

$$\mathbf{g}(t) = \mathbf{D}^\dagger\mathbf{c}(t)$$

$$\hat{\mathbf{f}}(t+1) \;=\; \hat{\mathbf{f}}(t) + \mu \mathbf{F} \begin{vmatrix} \mathbf{I}_N \\ \mathbf{0}_{L \times N} \end{vmatrix} [\mathbf{I}_N \mathbf{0}_{N \times L}] \mathbf{F}^H \Lambda^H \mathbf{g}(t)$$

ELSE, COMPUTE:

$$\mathbf{P}_\nu = \beta\, \mathbf{P}_\nu + (1 - \beta)\, \mathrm{diag}(\mathbf{c})\mathrm{diag}(\mathbf{c})^H$$

Note that the equations of the low-complexity algorithm ALGO2 can be applied every sample or once per block of samples. Applying the equations once every block of $L$ samples reduces computational complexity at the price of creating an $L$-sample delay and providing a somewhat slower initial convergence. Note also that the matrix $\mathbf{D}$ can be updated directly in the frequency domain instead of first updating the matrix $\mathbf{R}_c$ and computing the DFT.

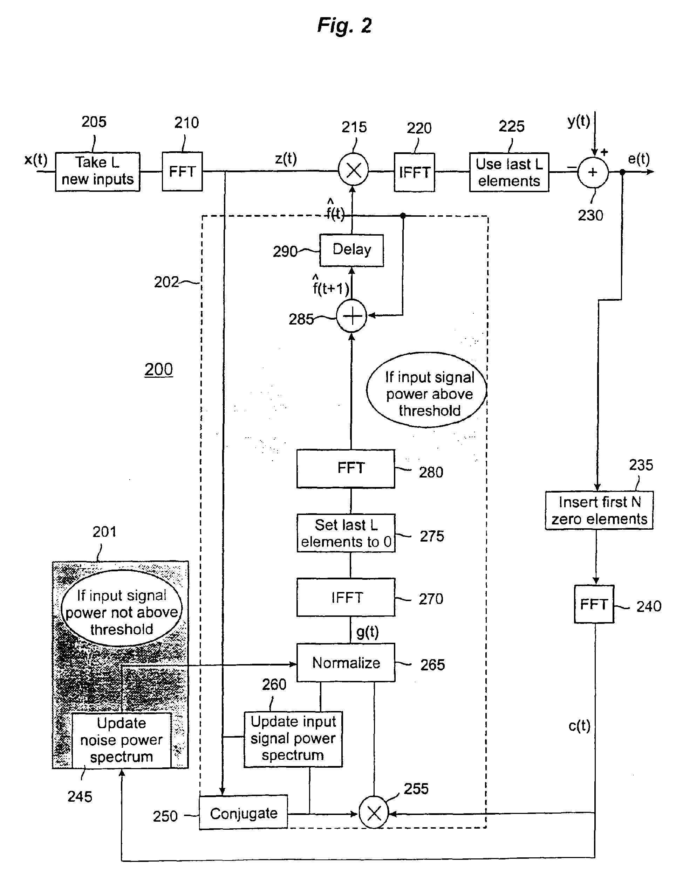

A flow diagram corresponding to the above described low-complexity algorithm ALGO2 is depicted in Figure 2. As shown, the input signal $x(t)$ is coupled to an input of a first sampling block 205, and an output of the first sampling block is coupled to an input of a first FFT block 210. An output $\mathbf{z}(t)$ of the first FFT block 210 is coupled to a first input of a first multiplier 215, and an output of the first multiplier 215 is coupled to an input of a first IFFT block 220. An output of the first IFFT block 220 is coupled to an input of a second sampling block 225, and an output of the second sampling block 225 is coupled to a subtractive input of a first summing device 230. The observed near-end input signal $y(t)$ is coupled to an additive input of the first summing device 230, and an output of the first summing device 230 serves as the residual or error signal $e(t)$.

The error signal $e(t)$ is coupled to an input of a first zero-padding block 235, and an output of the first zero-padding block 235 is coupled to an input of a second FFT block 240. An output $\mathbf{c}(t)$ of the second FFT block 240 is coupled to an input of a noise power spectrum update block 245 and to a first input of a second multiplier 255. The second multiplier 255 receives an additional input from a conjugation block 250, and the conjugation block 250 in turn receives the output $\mathbf{z}(t)$ of the first FFT block 210 as input. The output $\mathbf{z}(t)$ of the first FFT block 210 and an output of the conjugation block 250 are also coupled to first and second inputs, respectively, of a signal power spectrum update block 260. An output of the signal power spectrum update block 260 and an output of the second multiplier 255 are then coupled to first and second inputs, respectively, of a normalization block 265. Additionally, an output of the noise power spectrum update block 245 is coupled to a third input of the normalization block 265.

An output $\mathbf{g}(t)$ of the normalization block 265 is coupled to an input of a second IFFT block 270, and an output of the second IFFT block 270 is coupled to an input of a second zero-padding block 275. An output of the second zero-padding block 275 is coupled to an input of a third FFT block 280, and an output of the third FFT block 280 is coupled to a first additive input of a second summing device 285. An output $\hat{\mathbf{f}}(t+1)$ of the second summing device 285 is coupled to an input of a one-sample delay block 290, and an output $\hat{\mathbf{f}}(t)$ of the one-sample delay block 290 is coupled to a second input of the first multiplier 215 and to a second additive input of the second summing device 285.

In operation, the first sampling block 205 forms a block of L new and N old samples of the input signal $x(t)$. The first FFT block 210 then computes the discrete Fourier transform of the resulting input sample block (preferably using a Fast Fourier Transform algorithm) to provide the frequency domain sample vector $\mathbf{z}(t)$. The first multiplier 215 then element-wise multiplies the vector $\mathbf{z}(t)$ by the delay block output $\hat{\mathbf{f}}(t)$ (which represents the frequency-domain estimate of the impulse response $\mathbf{h}$) to form an echo estimate in the frequency domain. Thereafter, the first IFFT block 220 computes the inverse discrete Fourier transform of the resulting frequency-domain echo estimate, and the second sampling block 225 extracts the last L samples to provide the time-domain echo estimate (i.e., $\hat{s}(t)$). The first summation device 230 then subtracts the resulting time-domain echo estimate from the observed near-end signal $y(t)$ to form a sample block of the residual signal $\mathbf{e}(t)$ as desired.

As shown, the residual signal $\mathbf{e}(t)$ is used in combination with the frequency-domain sample vector $\mathbf{z}(t)$ to compute the frequency-domain impulse response estimate $\mathbf{f}(t)$. Specifically, the first zero-padding block 235 complements the residual signal sample block with N leading zeros, and the second FFT block computes the discrete Fourier transform of the resulting zero-padded sample block to form the frequency domain representation of the residual signal (i.e., $\mathbf{c}(t)$). Thereafter, a determination is made as to whether the input signal power level is large enough to generate a significant amount of echo. Specifically, the short-term power estimate (i.e., based on the current block of samples of the frequency domain input signal $\mathbf{z}(t)$) is compared to the predetermined threshold $th$ as described above. If the input signal power is above the threshold $th$, the algorithm proceeds to update the frequency-domain impulse response estimate as indicated by a lightly shaded box 202 in Figure 2. Otherwise, the algorithm updates the noise power spectrum estimate as indicated by a darkly shaded box 201 in Figure 2. Of course, the adaptation can also be qualified using the output of a double talk detector as described above with reference to Figure 1.

When the impulse response estimate is to be updated, the signal power spectrum update block 260 first computes a new estimate of the input signal power spectrum $\mathbf{p}_x$ (corresponding to the elements on the main diagonal of the signal power matrix $\mathbf{P}_x$ described above). In exemplary embodiments, the signal spectrum estimate is computed by element-wise multiplying the frequency domain input vector $\mathbf{z}(t)$ with its complex conjugate (i.e., the output of the conjugation block 250) and then averaging using, for example, an exponential window. The second multiplier 255 then element-wise multiplies the frequency-domain residual signal $\mathbf{c}(t)$ by the complex conjugate of the vector $\mathbf{z}(t)$, and the normalization block 265 normalizes (i.e., element-wise divides) the result using a weighted sum of the input and noise power spectra (i.e., $\mathbf{p}_x + \gamma \mathbf{p}_v$) to form the intermediate vector $\mathbf{g}(t)$. Selection of the weighting parameter $\gamma$, referred to hereinafter as the noise matching parameter, is described in detail below.

Once the intermediate vector $\mathbf{g}(t)$ is determined, the second IFFT block 270 computes the inverse discrete Fourier transform of the vector $\mathbf{g}(t)$, and the second zero-padding block 275 sets the last L elements of the resulting vector to zero. Thereafter, the third FFT block 280 computes the discrete Fourier transform of the output of the second zero-padding block 275, and the resulting vector is multiplied by the step size, or update gain $\mu$ and added (at the second summing device 285) to the previous frequency-domain impulse response estimate $\mathbf{f}(t+1)$ to provide an updated frequency-domain impulse response estimate $\mathbf{f}(t)$ as desired.

When the impulse response estimate is not to be updated (i.e., when the input signal power is not above the threshold *th,* indicating that there is a pause in user speech), the estimate of noise power spectrum $\mathbf{p}_v$ (corresponding to the elements on the main diagonal of the noise power matrix $\mathbf{P}_v$ described above) is updated based on the frequency domain representation of the residual signal $\mathbf{c}(t)$. In exemplary embodiments, the noise spectrum estimate $\mathbf{p}_v$ is computed by element-wise multiplying the frequency domain representation of the residual signal $\mathbf{c}(t)$ with its complex conjugate and then averaging using, for example, an exponential window. By periodically updating the noise power estimate in this way, any color present in the noise signal will be accounted for when the impulse response estimate is adapted.

Thus, the flow diagram of Figure 2 depicts a practical implementation of the low-complexity algorithm ALGO2 of the invention. Those skilled in the art will appreciate that there is a direct correspondence between the blocks of Figure 2 and the elements of the equations used above to define the exemplary algorithm ALGO2. Those skilled in the art will also appreciate that the operational blocks of Figure 2 can be implemented in practice using, for example, standard digital signal processing devices, application specific integrated circuitry, or a general purpose digital computer.

Computer simulations were performed in order to compare the performance of the low complexity algorithm ALGO2 with that of the first, reference algorithm ALGO1 and with that of the frequency domain adaptive filter described in the above cited article by J.J. Shynk, "Frequency-Domain and Multirate Adaptive Filtering," *IEEE Signal Processing Magazine,* Jan. 1992, pp. 14-37. The computer simulations also tested the relative performance of all three algorithms with respect to actual speech signals.

First, stationary signals were used to directly evaluate the validity of the approximations made when deriving the streamlined algorithm ALGO2 from the reference algorithm ALGO1. Stationary signals were also used to directly compare the performance of the exemplary algorithms ALGO1, ALGO2 with the performance of the above cited frequency domain adaptive filter. For purposes of these simulations, stationary signals are those for which the signal statistics do not depend on time for $t > 0$.

A typical simulation result is shown in Figure 3, wherein a first plot 310 shows the learning curves (i.e. $E[(e(t) - v(t))^2]$) for all three algorithms, and a second plot 320 shows the corresponding weight errors $E\left[\frac{\|\mathbf{h} - \hat{\mathbf{h}}(t)\|^2}{\|\mathbf{h}\|^2}\right]$. The curves represent ensemble averages taken over 200 independent trials. For the simulations shown in Figure 3, the input signal $x(t)$ is an autoregressive process generated by

$$\frac{1}{1+0.7z^{-1}-0.1z^{-2}-0.1z^{-3}+0.01z^{-4}},$$

and the measurement noise is also an autoregressive process generated by

$$\frac{1}{1-0.93z^{-1}+0.01z^{-2}}.$$

Additionally, the SNR is approximately 0dB, and the true impulse response is a 64-tap FIR filter with flat frequency response and coefficients distributed uniformly in the interval [-1/128, 1/128]. The design parameters were chosen as follows: $N$ = 64, $L$ = 64, $\mu$ = 0.04, $\beta$ = 0.99, and $\gamma$ = 128. Since the simulated signals are stationary, the measurement noise spectrum is estimated first (this time is not shown in Figure 3) and then used in the adaptive algorithm.

In Figure 3, note that the curves corresponding to the first algorithm ALGO1 (i.e., curves 312, 322) are not distinguishable from those corresponding to the low-complexity algorithm ALGO2 (i.e., curves 313, 323). Advantageously, this indicates that the approximations made in developing the low-complexity algorithm ALGO2 are at least reasonably good. Further, note in Figure 3 that both of the exemplary algorithms ALGO1, ALGO2 outperform the frequency domain adaptive filter (curves 311, 321).

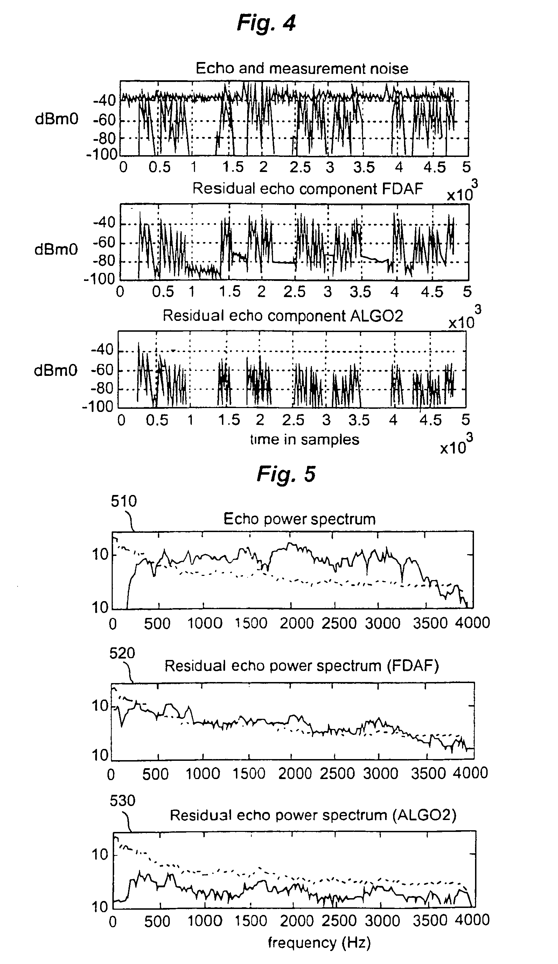

Additional computer simulations were conducted to study the performance of the streamlined algorithm ALGO2 in an acoustic echo cancelation application (specifically in an automobile hands-free telephone application). Figure 4 presents the learning curves (averaged in time using an exponential window) of one typical simulation. For these simulations, the design parameters were $N$= 256 (corresponding to a 256-tap echo impulse response identified in a Volvo 940 with two people sitting in the front seats), $L$ = 256, $\mu$ = 0.04, $\beta$ = 0.99, and $\gamma$ = 128. The noise power spectra $\mathbf{P}_v$ was estimated on-line. For the observed input signal $y(t)$, a female speaker is generating the echo, and the echo is then corrupted by a noise recorded in a moving automobile. The sampling rate is 8000 Hz, and the curves in Figure 4 thus correspond to a one minute time interval.

As shown in the first plot 410 of Figure 4, the echo power is lower than the noise power most of the time. However, as the signals are concentrated in different frequency bands, the echo is clearly audible before adaptive processing. Though the frequency domain adaptive filter does improve the situation, the echo remains audible even after processing as shown in the second plot 420 of Figure 4. By way of contrast, the low-complexity algorithm of the invention ALGO2 makes the residual echo barely audible in the noise (after an initial convergence period), as shown in the third plot 430 of Figure 4.

Figure 5 shows the power spectra computed using samples 394000 to 410000 from the curves of Figure 4. It can be seen from the first plot 510 that the echo signal power is above the measurement noise power at most frequencies. As shown in the second plot 520, processing by the frequency domain adaptive filter attenuates echo, but the residual echo power remains above the measurement noise power at several frequencies. By way of contrast, the third plot 530 shows that processing by the low complexity algorithm ALGO2 reduces the residual echo power below the measurement noise power at all frequencies, and thus the masking effects of human perception make the echo inaudible.

Note that the exemplary low-complexity algorithm ALGO2 introduces an L-sample delay into the signal processing path. Since it is usually desirable to choose L approximately equal to the impulse response length N in order to reduce computational complexity, such a delay may be unacceptable for long echo path impulse responses.

Advantageously, however, additional embodiments of the invention reduce the signal processing delay without dramatically increasing computational complexity. Specifically, the alternative embodiments divide the echo path impulse response h into sections of length K and treat the adaptive filter as a series connection of the resulting sectional filters. An analogous approach is described, for example, in the above cited paper by J. Soo and K.K. Pang, "Multidelay Block Frequency Domain Adaptive Filter," *IEEE Trans. Acoustics, Speech and Signal Processing,* vol. 38, No. 2, Feb. 1990, pp. 373-376).

According to the additional embodiments, it is advantageous to set the section length K approximately equal to the block length L. As K<<N, the delay is reduced. In many applications the echo canceler is followed by a speech coder which operates on blocks of signal samples and introduces a delay larger than its block length. The main contribution to this delay comes from collecting the input signal samples. In these applications, it is desirable to set L equal to the speech codec block length, or to an integer fraction thereof. Then the echo canceler output block can be delivered to the speech coder, instead of a sequence of samples, and the overall delay is only slightly increased. The resulting algorithm, referred to hereinafter as ALGO3, is as follows:

## ADAPTIVE ALGORITHM ALGO3

INITIALIZE ESTIMATES AS:

$$\hat{\mathbf{f}}_k(t=0) \;=\; \mathbf{0}_{(K+L)\times 1}, \; \forall k$$

$$\mathbf{P}_x(t=0) \;=\; \sigma_x^2 \mathbf{I}_{K+L}$$

$$P_v(t=0) = \sigma_v^2 I_{K+L}$$

$$\Lambda_k = \Lambda_{k+1,} \forall k \neq kmax$$

$$\Lambda_{kmax} = \mathrm{diag}(\mathrm{DFT}([x_{t-K-L+1}...x_t]))$$

$$\mathbf{e}(t) = \mathbf{y}(t) - \sum_k [0_{L \times K} \mathbf{I}_L] \mathbf{F}^H \Lambda_k \hat{\mathbf{f}}_k(t)$$

$$\mathbf{c}(t) = \mathbf{F} \begin{bmatrix} 0_{K \times 1} \\ \mathbf{e}(t) \end{bmatrix}$$

AND, IF $\sum_k \mathrm{Tr}(\Lambda_k \Lambda_k^H) > th$ , THEN COMPUTE:

$$\mathbf{P}_x = \beta \mathbf{P}_x + (1-\beta) \sum_k \Lambda_k \Lambda_k^H$$

$$\mathbf{D} = \mathbf{P}_x + \gamma \mathbf{P}_v$$

$$\mathbf{g}(t) = \mathbf{D}^\dagger \mathbf{c}(t)$$

$$\hat{\mathbf{f}}_k(t+1) = \hat{\mathbf{f}}_k(t) + \mu \mathbf{F} \begin{bmatrix} \mathbf{I}_K \\ 0_{L \times K} \end{bmatrix} [\mathbf{I}_K 0_{K \times L}] \mathbf{F}^H \Lambda_k^H \mathbf{g}(t), \forall k$$

ELSE, COMPUTE:

$$\mathbf{P}_v = \beta \mathbf{P}_v + (1-\beta) \, \mathrm{diag}\,(\mathbf{c}) \, \mathrm{diag}(\mathbf{c})^H$$

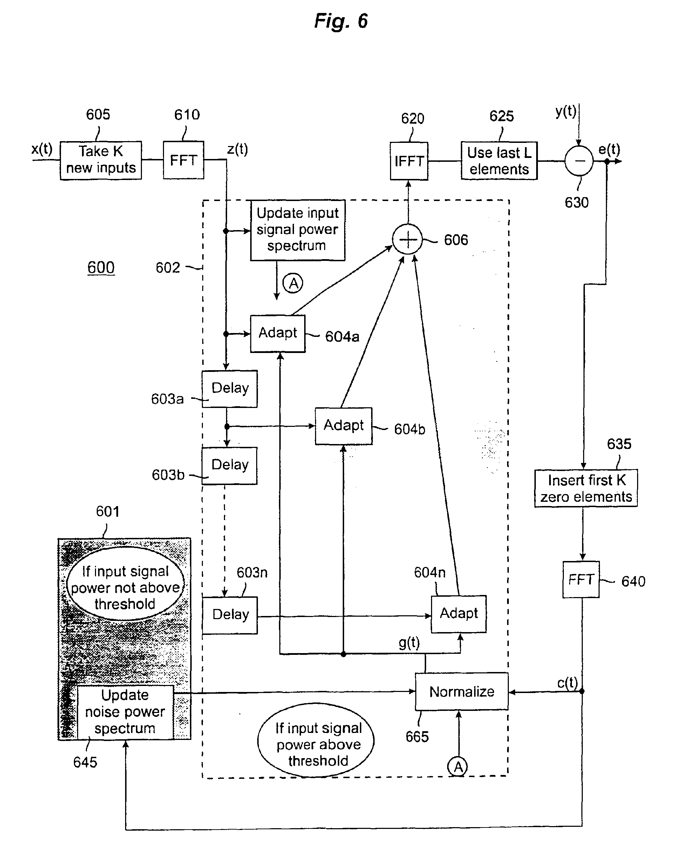

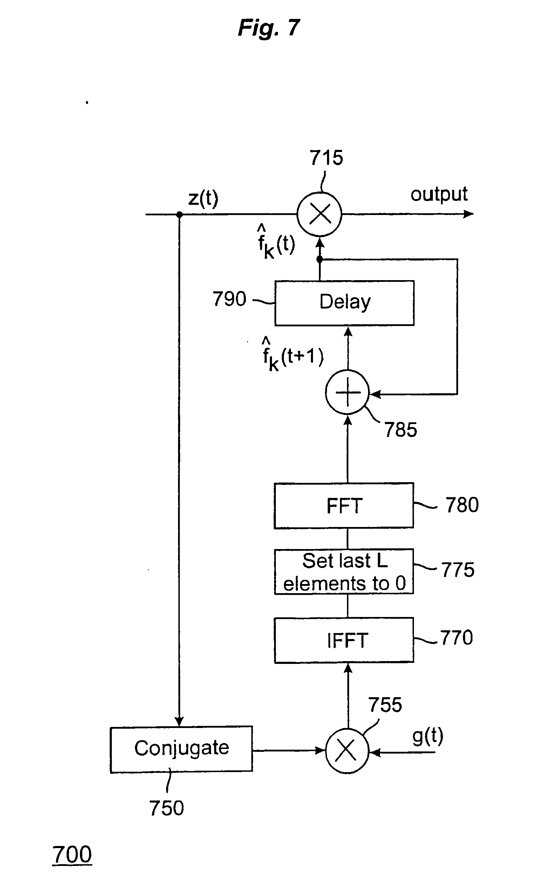

A flow diagram corresponding to the above described algorithm ALGO3 is depicted in Figures 6 and 7. Those skilled in the art will appreciate that, just as the operational blocks of Figure 2 correspond to the elements of the equations used to define the low-complexity algorithm ALGO2, so do the operational blocks of Figures 6 and 7 correspond to the elements of the equations used to define the alternative algorithm ALGO3. Like the operational blocks of Figure 2, those of Figures 6 and 7 can be implemented in practice using, for example, standard digital signal processing devices, application specific integrated circuitry, or a general purpose digital computer.

Note that each of the exemplary algorithms ALGO1, ALGO2, ALGO3 includes several design parameters which are set before the algorithm is implemented. Advantageously, the invention provides a guideline for properly setting these design parameters in practice.

For example, the filter length N can be set based on the particular application at hand. In network echo cancelation and acoustic echo cancelation for automobile hands-free applications, a filter length or model order in the range of 256 to 512 taps typically provides quality results. On the other hand, in teleconferencing applications in which the impulse response of an entire conference room is modeled, a filter length on the order of several thousand taps typically provides better results.

The impulse response section length K, used in the alternative algorithm ALGO3, establishes the processing delay of the algorithm and should therefore be made relatively small. On the other hand, the overall computational complexity of the algorithm increases as K decreases, and a proper trade-off is therefore established based on available computing power. In applications in which an echo canceler is followed by a speech coder, it is typically advantageous to set K equal to the block length of the speech coder, or some integer fraction thereof. Additionally, K is typically selected such that the number of filter sections (i.e., N/K) is an integer.

The least computationally intensive implementation results from setting the block length L approximately equal to the filter length N in the first low-complexity embodiment ALGO2 and approximately equal to the section length K in the alternative low-complexity embodiment ALGO3. It is also advantageous to set N+L or K+L equal to an integer power of two in the first and second low-complexity embodiments ALGO2, ALGO3, respectively.

The parameter $\beta$ determines the memory length of the power spectrum estimates and is made positive and less than one. Selection of $\beta$ in the interval [0.9, 0.995] has shown to provide quality results.

The step size $\mu$ is made positive and small enough to guarantee stability of the adaptive algorithm. Making the step size too small, however, slows down the adaptation, especially in combination with long impulse responses. Setting the step size in the range from 0.1/R to 0.5/R, where $R = \sqrt{N+L}$ for the first low-complexity embodiment ALGO2 and $R = \sqrt{K+L}$ for the alternative low-complexity embodiment ALGO3, has proven to work well.

As noted above, the noise matching parameter $\gamma$ weights the normalizing power spectra of the input signal and the measurement noise and is made nonnegative. Making the noise matching parameter too large will cause the measurement noise to be weighted too heavily and will thus significantly slow down the convergence of the algorithm. On the other hand, making the noise matching parameter too small will cause the measurement noise to be weighted too lightly and will thus provide relatively fast adaptation at the price of higher residual echo power at steady state. In such case, the shape of the residual echo spectrum will be close to the original echo spectrum with some degree of attenuation (i.e., approximately the same echo attenuation will be obtained over the entire frequency band). By way of contrast, reasonably high values of $\gamma$ will lead to improved performance at steady state in the sense that the residual echo spectrum will be further attenuated near the frequencies where it is above the measurement noise spectrum (i.e., the masking effects of human perception tend to render the echo inaudible when the entire residual echo spectrum lies below the noise spectrum). The price for such an improvement can be a slightly slower initial convergence of the algorithm. However, according to the invention, this effect can be overcome by making the parameter $\gamma$ time dependent.

For example, the noise matching parameter $\gamma$ can be computed as

$$\gamma(t) = \frac{E[r^2(t)]}{E[e^2(t)] \cdot E[v^2(t)]} \ ,$$

where E[] denotes mathematical expectation. This approach provides a relatively small $\gamma$ when the residual echo is much stronger than the noise and thus provides relatively fast adaptation. However, if the residual echo power approaches the noise power, then $\gamma$ becomes large, and the algorithm starts to color the residual echo spectrum as described above. In practice, the mathematical expectations are not known and are estimated. One example of such an estimate is a sum of squares over a block containing the frequency domain representation of the corresponding signal. In other words, the noise matching parameter can be computed as

$$\gamma(t) = \frac{\sum |z(t)|^2}{\text{Max} \left( \left( \sum |c(t)|^2 - \sum |c_v|^2 \right), const \right)} \ ,$$

where $c_v$ is a block containing the frequency domain representation of the measurement noise and const is a small positive constant guaranteeing a positive $\gamma$ in the presence of estimation errors.

In sum, the present invention provides a number of adaptive algorithms which can be used, for example, in echo canceling applications. The exemplary algorithms are derived by minimizing a best linear unbiased estimate criterion function and using eigenproperties of cyclic matrices. Among several possible cyclic extensions of signal matrices, a cyclic extension leading to adaptive algorithms similar to the classical frequency domain adaptive filter is used. Since the exemplary algorithms incorporate knowledge of measurement noise, they perform better in noisy environments as compared to conventional approaches. The superior performance of the disclosed algorithms in noisy environments has been demonstrated by way of computer simulation.

Note that the exemplary algorithms of the invention differ from prior attempts to utilize a best linear unbiased estimate. For example, in the above cited paper by K.C. Ho, "A Minimum Misadjustment Adaptive FIR Filter," *IEEE Trans. Signal Processing,* Vol. 44, pp. 577-585, March, 1996 and in A.C. Orgren, S. Dasgupta, C.E. Rohrs and N.R. Malik, "Noise Cancellation with Improved Residuals," *IEEE Trans. Signal Processing,* Vol. 39, pp. 2629-2639, Dec. 1991, the measurement noise is assumed to be an autoregressive process and a whitening filter is applied to the residual signal before it is fed back to the coefficient updates. In the paper by Orgren, Dasgupta, Rohrs and Malik, it is assumed that the proper whitening filter is known *a priori,* while an adaptive whitening is considered in the paper by Ho.

By way of contrast, the algorithms of the invention do not assume any particular model for the measurement noise (although it is assumed that a correlation matrix of reasonable size describes the noise properties adequately). Additionally, the invention provides frequency domain algorithms and minimizes a variant of the best linear unbiased estimate criterion which is known for its good numerical properties. Further, according to the invention, the noise correlation is estimated during natural pauses in speech.

Those skilled in the art will appreciate that the present invention is not limited to the specific exemplary embodiments which have been described herein for purposes of illustration. The scope of the invention, therefore, is defined by the claims which are appended hereto, rather than the foregoing description.

**Claims**

1. An echo cancellation device (110) configured to suppress an echo component (s(t)) of an observed signal (y(t)), the echo component (s(t)) resulting from coupling of a source signal (x(t)) through an echo path, said echo cancellation device comprising:

   an adaptive filter (205,210,215,220,225,202,201) configured to approximate said echo path and to thereby provide an estimate ($\hat{s}$(t)) of said echo component (s(t)), said adaptive filter being configured to employ a noise component estimation ($p_v$) of said observed signal (y(t)), and **characterized by**:

   means (230) for subtracting said estimate ($\hat{s}$(t)) of said echo component (s(t)) from said observed signal (y(t)) to provide an echo-cancelled residual signal (e(t));
   means (202) for updating an impulse response estimate of said echo path when a measurement of power in a block of samples of said source signal (x(t)) is above a threshold;
   means (201) for updating the noise component estimation ($P_v$) of said observed signal (y(t)) otherwise, said means (202) for updating the impulse response estimate of said echo path further comprising means for estimating the noise component ($p_v$) of said observed signal (y(t)) based upon an estimation of a power spectrum of said echo-cancelled residual signal (e(t)).

2. The echo cancellation device of Claim 1, wherein said observed signal (y(t)) includes at least one intermittent speech component, and the means for estimating said noise component ($P_v$) of said observed signal (y(t)) are adapted to operate in real time during pauses in said at least one speech component of said observed signal.

3. The echo cancellation device of Claim 2, including means for determining said pauses in said at least one speech component of said observed signal (y(t)) based upon a measurement of power in a block of samples of said source signal (x(t)).

4. The echo cancellation device of Claim 1, wherein said means (202) for updating an impulse response estimate of said echo path further include means (260) to update a power spectrum component estimation ($P_x$) of said source signal (x(t)) and means (265) for combining said updated power spectrum component estimation ($p_x$) of said source signal (x(t)), said noise component estimation ($p_v$) of said observed signal (y(t)) and a frequency-domain representation of said echo-cancelled residual signal (e(t)).

5. The echo cancellation device of Claim 4, wherein said means for combining (265) is configured to perform the combination upon a weighted sum of said noise component estimation ($p_v$) of said observed signal and said updated power spectrum component estimation ($P_x$) of said source signal (x(t)).

6. The echo cancellation device of Claim 5, wherein said means for combining (265) is adapted to perform said weighted sum by adding said updated power spectrum component estimation ($p_x$) of said source signal (x(t)) to a product of said noise component estimation ($P_v$) of said observed signal (y(t)) and a noise matching parameter ($\gamma$).

7. The echo cancellation device of Claim 6, including means adapted to adjust said noise matching parameter ($\gamma$) dynamically based upon samples of said echo-cancelled residual signal (e(t)) and samples of said source signal (x(t)).

8. A method for cancelling an echo component of an observed signal (y(t)), the echo component resulting from coupling a source signal (x(t)) through an echo path, said method comprising the steps of:

   sampling (205) said source signal to provide a block of source signal samples;
   computing (210) a discrete Fourier transform of said block of source signal samples to provide a frequency domain representation (z(t)) of said source signal (x(t));
   multiplying (215) said frequency domain representation (z(t)) of said source signal (x(t)) by a frequency domain estimate of an impulse response of said echo path to provide a frequency domain echo estimate;
   computing an inverse discrete Fourier transform (220) of said frequency domain echo estimate to provide a time domain echo estimate signal ($\hat{s}$(t));
   subtracting (230) said time domain echo estimate signal ($\hat{s}$(t)) from said observed signal (y(t)) to provide an echo-cancelled residual signal (e(t));
   computing a discrete Fourier transform (240) of a block of samples of said echo-cancelled residual signal to provide a frequency domain representation of said echo-cancelled residual signal;
   adapting (200) said frequency domain estimate of the impulse response of said echo path based upon said frequency domain representation of said echo-cancelled residual signal (e(t)) and based upon said frequency domain representation (z(t)) of said source signal (x(t)), said step of adapting (200) said frequency domain estimate of said impulse response incorporates an estimation of a noise component ($P_v$) of said observed signal (y(t)), and wherein said step of adapting said frequency domain estimate of said impulse response comprises the steps of:

      updating (202) said frequency domain estimate of said impulse response when a measurement of power in said block of source signal (x(t)) samples is above a threshold; and updating (201;245) the noise component estimation ($p_v$) of said observed signal (y(t)) otherwise, the updated noise component estimation ($p_v$) being employed in a subsequent update of the frequency domain estimate of said impulse response as a respective noise component.

9. The method of Claim 8, wherein said step of updating (200) said frequency domain estimate of said impulse response comprises the steps of:

   updating (260) a power spectrum component estimation ($p_x$) of said source signal (x(t));
   computing a weighted sum of said noise component estimation ($p_v$) of said observed signal (y(t)) and said updated power spectrum component estimation ($p_x$) of said source signal (x(t)); and
   computing (202) an update of said frequency domain estimate of said impulse response based upon said weighted sum.

10. The method of Claim 9, comprising the step of:

   adding said updated power spectrum component estimation ($P_x$) of said source signal (x(t)) to a product of said noise component estimation ($p_v$) of said observed signal (y(t)) and a noise matching parameter ($\gamma$) to provide said weighted sum.

11. The method of Claim 10, comprising the step of:

   dynamically adjusting said noise matching parameter ($\gamma$) based upon samples of said source signal (x(t)) and said echo-cancelled residual signal (e(t)).

**Patentansprüche**

1. Ein Echoaufhebungsgerät (110), konfiguriert zum Unterdrücken einer Echokomponente (s(t)) eines beobachteten Signals (y(t)), wobei die Echokomponente (s(t)) vom Koppeln eines Quellensignals (x(t)) durch einen Echopfad herrührt, das Echoaufhebungsgerät umfassend:

   ein adaptives Filter (205, 210, 215, 220, 225, 202, 201) konfiguriert zum Annähern des Echopfads und zum Bereitstellen einer Abschätzung (s(t)) der Echokomponente (s(t)) dabei, wobei das adaptive Filter konfiguriert ist zum Einsetzen einer Abschätzung der Rauschkomponente ($p_v$) des beobachteten Signals (y(t)), und **gekennzeichnet ist durch**:

   Mittel (230) zum Subtrahieren der Abschätzung (s(t)) der Echokomponente (s(t)) von dem beobachteten Signal (y(t)), um ein Restsignal (e(t)) mit aufgehobenem Echo bereitzustellen;
   Mittel (202) zum Aktualisieren einer Abschätzung der Impulsantwort des Echopfads, wenn eine Messung der Leistung in einem Block von Proben des Quellensignals (x(t)) oberhalb eines Schwellwerts ist;
   Mittel (201) zum Aktualisieren der Abschätzung der Rauschkomponente ($P_v$) des beobachteten Signals (y(t)) in anderen Fällen,

   wobei die Mittel (202) zum Aktualisieren der Abschätzung der Impulsantwort des Echopfads ferner Mittel zum Abschätzen der Rauschkomponente ($p_v$) des beobachteten Signals (y(t)) auf der Grundlage einer Abschätzung eines Leistungsspektrums des Restsignals (e(t)) mit aufgehobenem Echo umfassen.

2. Das Echoaufhebungsgerät nach Anspruch 1, wobei das beobachtete Signal (y(t)) mindestens eine intermittierende Sprachkomponente enthält, und die Mittel zum Abschätzen der Rauschkomponente ($p_v$) des beobachteten Signals (y(t)) dazu angepasst sind, während Pausen in der mindestens einen Sprachkomponente des beobachteten Signals in Echtzeit zu operieren.

3. Das Echoaufhebungsgerät nach Anspruch 2, enthaltend Mittel zum Bestimmen der Pausen in der mindestens einen Sprachkomponente des beobachteten Signals (y(t)), auf der Grundlage einer Messung der Leistung in einem Block von Proben des Quellensignals (x(t)).

4. Das Echoaufhebungsgerät nach Anspruch 1, wobei die Mittel (202) zum Aktualisieren einer Abschätzung der Impulsantwort des Echopfads ferner Mittel (260) zum Aktualisieren einer Abschätzung der Leistungsspektrumskomponente ($P_x$) des Quellensignals (x(t)) und Mittel (265) zum Kombinieren der aktualisierten Abschätzung der Leistungsspektrumskomponente ($p_x$) des Quellensignals (x(t)), der Abschätzung der Geräuschkomponente ($p_v$) des beobachteten Signals (y(t)) und einer FrequenzDomänendarstellung des vom Echo aufgehobenen Restsignals (e(t)) umfassen.

5. Das Echoaufhebungsgerät nach Anspruch 4, wobei das Mittel zum Kombinieren (265) konfiguriert ist, um die Kombination auf einer gewichteten Summe der Abschätzung der Rauschkomponente ($p_v$) des beobachteten Signals und der aktualisierten Abschätzung der Leistungsspektrumskomponente ($p_x$) des Quellensignals (x(t)) auszuführen.

6. Das Echoaufhebungsgerät nach Anspruch 5, wobei das Mittel zum Kombinieren (265) dazu angepasst ist, die gewichtete Summe auszuführen durch Addieren der aktualisierten Abschätzung der Leistungsspektrumskomponente ($P_x$) des Quellensignals (x(t)) zu einem Produkt der Abschätzung der Rauschkomponente ($P_v$) des beobachteten Signals (y(t)) und einem Rauschanpassungsparameter ($\gamma$).

7. Das Echoaufhebungsgerät nach Anspruch 6, umfassend Mittel, dazu angepasst den Rauschanpassungsparameter ($\gamma$) auf der Grundlage von Proben des Restsignals (e (t)) mit aufgehobenem Echo und Proben des Quellensignals (x(t)) dynamisch einzuregeln.

8. Ein Verfahren zum Aufheben einer Echokomponente eines beobachteten Signals (y(t)), wobei die Echokomponente vom Koppeln eines Quellensignals (x(t)) durch einen Echopfad herrührt, das Verfahren umfassend die Schritte:

   Abtasten (205) des Quellensignals, um einen Block von Quellensignalproben bereitzustellen;
   Berechnen (210) einer diskreten Fouriertransformation des Blocks der Quellensignalproben, um eine FrequenzdomänenDarstellung (z(t)) des Quellensignals (x(t)) bereitzustellen;
   Multiplizieren (215) der Frequenzdomänendarstellung (z(t)) des Quellensignals (x(t)) mit einer Frequenzdomänenabschätzung einer Impulsantwort des Echopfads, um eine Abschätzung des Frequenzdomänenechos bereitzustellen;

Berechnen einer inversen diskreten Fouriertransformation (220) der Frequenzdomänen-Echoabschätzung, um ein Echoabschätzungssignal in der Zeitdomäne (s(t)) bereitzustellen;

Subtrahieren (230) des Echoabschätzungssignals in der Zeitdomänen (s(t)) von dem beobachteten Signal (y(t)), um ein Restsignal (e(t)) mit aufgehobenem Echo bereitzustellen;

Berechnen einer diskreten Fouriertransformation (240) von einem Block von Proben Restsignals mit aufgehobenem Echo, um eine Frequenzdomänendarstellung des Restsignals mit aufgehobenem Echo bereitzustellen;

Anpassen (200) der Frequenzdomänenabschätzung der Impulsantwort des Echopfads, basiert auf der Frequenzdomänendarstellung des Restsignals (e(t)) mit aufgehobenem Echo und auf der Grundlage der Frequenzdomänendarstellung (z(t)) des Quellensignals (x(t)), wobei der Schritt des Anpassens (200) der Frequenzdomänenabschätzung der Impulsantwort eine Abschätzung einer Rauschkomponente ($p_v$) des beobachteten Signals (y(t)) enthält, und wobei der Schritt des Anpassens der Frequenzdomänenabschätzung der Impulsantwort die Schritte umfasst:

Aktualisieren (202) der Frequenzdomänenabschätzung der Impulsantwort, wenn eine Messung der Leistung in dem Block der Quellensignal (x(t))-Proben oberhalb eines Schwellwerts ist; und Aktualisieren (201; 245) der Abschätzung der Rauschkomponente ($P_v$) des beobachteten Signals (y(t)) in anderen Fällen, wobei die aktualisierte Abschätzung der Rauschkomponente ($p_v$) in einer nachfolgenden Aktualisierung der Frequenzdomänenabschätzung der Impulsantwort als eine entsprechende Rauschkomponente verwendet wird.

9. Das Verfahren nach Anspruch 8, wobei der Schritt des Aktualisierens (200) der Frequenzdomänenabschätzung von jeder Impulsantwort die Schritte umfasst:

Aktualisieren (260) einer Abschätzung der Leistungsspektrumskomponente ($P_x$) des Quellensignals (x(t));
Berechnen einer gewichteten Summe der Abschätzung der Rauschkomponente ($P_v$) des beobachteten Signals (y(t)) und der aktualisierten Abschätzung der Leistungsspektrumskomponente ($p_x$) des Quellensignals (x(t)); und
Berechnen (202) einer Aktualisierung der Frequenzdomänenabschätzung der Impulsantwort auf der Grundlage der gewichteten Summe.

10. Das Verfahren nach Anspruch 9, umfassend die Schritte:

Addieren der aktualisierten Abschätzung der Leistungsspektrumskomponente ($p_x$) des Quellensignals (x(t)) zu einem Produkt der Abschätzung der Rauschkomponente ($p_v$) des beobachteten Signals (y(t)) und einem Rauschanpassungsparameter ($\gamma$), um die gewichtete Summe bereitzustellen.

11. Das Verfahren nach Anspruch 10, umfassend die Schritte:

dynamisch Einstellen des Rauschanpassungsparameters ($\gamma$) auf der Grundlage von Proben des Quellensignals (x(t)) und des Restsignals (e(t)) mit aufgehobenem Echo.

**Revendications**

1. Dispositif d'annulation d'écho (110) configuré pour supprimer une composante d'écho (s(t)) dans un signal observé (y(t)), la composante d'écho (s(t)) résultant du couplage d'un signal de source (x(t)) par un trajet d'écho, ledit dispositif d'annulation d'écho comprenant :

un filtre adaptatif (205, 210, 215, 220, 225, 202, 201) configuré pour former une approximation dudit trajet d'écho et fournir ainsi une estimation (S(t)) de ladite composante d'écho (s(t)), ledit filtre adaptatif étant configuré pour employer une estimation de la composante de bruit ($P_v$) dudit signal observé (y(t)), et **caractérisé par** :

un moyen (230) destiné à soustraire dudit signal observé (y(t)) ladite estimation ($\hat{s}$(t)) de ladite composante d'écho (s(t)), afin de produire un signal résiduel après annulation d'écho (e(t)) ;
un moyen (202) destiné à mettre à jour une estimation de réponse impulsionnelle dudit trajet d'écho lorsqu'une mesure de la puissance dans un bloc d'échantillons dudit signal de source (x(t)) est supérieure à un seuil ;

un moyen (201) destiné à mettre à jour l'estimation de la composante de bruit ($P_v$) dudit signal observé (y(t)) sinon,

ledit moyen (202) destiné à mettre à jour une estimation de réponse impulsionnelle dudit trajet d'écho comprenant en outre un moyen destiné à estimer la composante de bruit ($P_v$) dudit signal observé (y(t)) sur la base d'une estimation d'un spectre de puissance dudit signal résiduel après annulation d'écho (e(t)).

2. Dispositif d'annulation d'écho selon la revendication 1, dans lequel ledit signal observé (y(t)) comprend au moins une composante de parole intermittente et le moyen destiné à estimer ladite composante de bruit ($P_v$) dudit signal observé (y(t)) est adapté pour fonctionner en temps réel pendant les pauses de ladite au moins une composante de parole dans ledit signal observé.

3. Dispositif d'annulation d'écho selon la revendication 2, comprenant un moyen destiné à déterminer lesdites pauses dans ladite au moins une composante de parole dans ledit signal observé (y(t)) sur la base d'une mesure de la puissance dans un bloc d'échantillons dudit signal de source (x(t)).

4. Dispositif d'annulation d'écho selon la revendication 1, dans lequel ledit moyen (202) destiné à mettre à jour une estimation de réponse impulsionnelle dudit trajet d'écho comprend en outre un moyen (260) destiné à mettre à jour une estimation de la composante de puissance spectrale ($p_x$) dudit signal de source (x(t)) et un moyen (265) destiné à combiner ladite estimation mise à jour de la composante de puissance spectrale ($p_x$) dudit signal de source (x(t)), ladite estimation de la composante de bruit ($p_v$) dudit signal observé (y(t)) et une représentation dans le domaine fréquentiel dudit signal résiduel après annulation d'écho (e(t)).

5. Dispositif d'annulation d'écho selon la revendication 4, dans lequel ledit moyen de combinaison (265) est configuré pour réaliser la combinaison sur la base d'une somme pondérée de ladite estimation de composante de bruit ($P_v$) dudit signal observé et de la ladite estimation mise à jour de la composante de puissance spectrale ($p_x$) dudit signal de source (x(t)).

6. Dispositif d'annulation d'écho selon la revendication 5, dans lequel ledit moyen de combinaison (265) est configuré pour réaliser ladite somme pondérée en ajoutant ladite estimation mise à jour de la composante de puissance spectrale ($p_x$) dudit signal de source (x(t)) à un produit de ladite estimation de la composante de bruit ($P_v$) dudit signal observé (y(t)) et d'un paramètre d'adaptation du bruit ($\gamma$).

7. Dispositif d'annulation d'écho selon la revendication 6, comprenant un moyen adapté pour ajuster dynamiquement ledit paramètre d'adaptation du bruit ($\gamma$) sur la base d'échantillons dudit signal résiduel après annulation d'écho (e(t)) et d'échantillons dudit signal de source (x(t)).

8. Procédé d'annulation d'une composante d'écho dans un signal observé (y(t)), la composante d'écho résultant du couplage d'un signal de source (x(t)) par un trajet d'écho, ledit procédé comprenant les étapes consistant à :

échantillonner (205) ledit signal de source pour fournir un bloc d'échantillons du signal de source ;

calculer (210) une transformation discrète de Fourier sur ledit bloc d'échantillons du signal de source afin de fournir une représentation dans le domaine fréquentiel (z(t)) dudit signal de source (x(t)) ;

multiplier (215) ladite représentation dans le domaine fréquentiel (z(t)) dudit signal de source (x(t)) par une estimation dans le domaine fréquentiel d'une réponse impulsionnelle dudit trajet d'écho afin de fournir une estimation de l'écho dans le domaine fréquentiel ;

calculer une transformation discrète de Fourier inverse (220) de ladite estimation d'écho dans le domaine fréquentiel afin de fournir un signal d'estimation d'écho ($\hat{s}$(t)) dans le domaine temporel ;

soustraire (230) ledit signal d'estimation d'écho ($\hat{s}$(t)) dans le domaine temporel dudit signal observé (y(t)) afin de fournir un signal résiduel après annulation d'écho (e(t)) ;

calculer une transformation discrète de Fourier (240) sur un bloc d'échantillons dudit signal résiduel après annulation d'écho pour fournir une représentation dans le domaine fréquentiel dudit signal résiduel après annulation d'écho ;

adapter (200) ladite estimation dans le domaine fréquentiel de la réponse impulsionnelle dudit trajet d'écho sur la base de ladite représentation dans le domaine fréquentiel dudit signal résiduel après annulation d'écho (e(t)) et sur la base de ladite représentation dans le domaine fréquentiel (z(t)) dudit signal de source (x(t)), ladite étape d'adaptation (200) de ladite estimation dans le domaine fréquentiel de ladite réponse impulsionnelle comprenant une estimation d'une composante de bruit ($P_v$) dudit signal observé (y(t)), et ladite étape d'adaptation de ladite estimation dans le domaine fréquentiel de ladite réponse impulsionnelle comprenant les étapes consistant à :

mettre à jour (202) ladite estimation dans le domaine fréquentiel de ladite réponse inpulsionnelle lorsqu'une mesure de la puissance dans ledit bloc d'échantillons du signal de source (x(t)) est supérieure à un seuil ; et mettre à jour (201; 245) l'estimation de la composante de bruit ($p_v$) dudit signal observé (y(t)) sinon, l'estimation mise à jour de la composante de bruit ($p_v$) étant employée dans une mise à jour ultérieure de l'estimation dans le domaine fréquentiel de ladite réponse impulsionnelle comme composante de bruit respective.

9. Procédé selon la revendication 8, dans lequel ladite étape de mise à jour (200) de ladite estimation dans le domaine fréquentiel de ladite réponse impulsionnelle comprend les étapes consistant à :

mettre à jour (260) une estimation de la composante de puissance spectrale ($p_x$) dudit signal de source (x(t)) ; calculer une somme pondérée de ladite estimation de la composante de bruit ($P_v$) dudit signal observé (y(t)) et de ladite estimation mise à jour de la composante de puissance spectrale ($p_x$) dudit signal de source (x(t)) ; et calculer (202) une mise à jour de ladite estimation dans le domaine fréquentiel de ladite réponse impulsionnelle, sur la base de ladite somme pondérée.

10. Procédé selon la revendication 9, comprenant l'étape consistant à :

additionner ladite estimation mise à jour de la composante de puissance spectrale ($p_x$) dudit signal de source (x(t)) et un produit de ladite estimation de la composante de bruit ($P_v$) dudit signal observé (y(t)) et d'un paramètre d'adaptation du bruit ($\gamma$), afin de fournir ladite somme pondérée.

11. Procédé selon la revendication 10, comprenant l'étape consistant à :

ajuster dynamiquement ledit paramètre d'adaptation du bruit ($\gamma$) sur la base d'échantillons dudit signal de source (x(t)) et dudit signal résiduel après annulation d'écho (e(t)).

**Fig. 1**

.

**Fig. 2**

## Fig. 3A

## Fig. 3B

## *Fig. 4*

Echo and measurement noise

Residual echo component FDAF

Residual echo component ALGO2

time in samples

## *Fig. 5*

Echo power spectrum

Residual echo power spectrum (FDAF)

Residual echo power spectrum (ALGO2)

frequency (Hz)

*Fig. 6*

## Fig. 7